# FASCICULE DE BREVET EUROPEEN

(11) **EP 3 546 366 B1**
(45) Date de publication et mention de la délivrance du brevet: **22.09.2021**
(21) Numéro de dépôt: 19165911.9
(22) Date de dépôt: 28.03.2019
(51) Int. Cl.: B64D 27/02

(54) **UNITÉ DE PROPULSION À HÉLICE COMPRENANT UN MOTEUR THERMIQUE ET UN MOTEUR ÉLECTRIQUE ET AÉRONEF COMPORTANT UNE TELLE UNITÉ DE PROPULSION À HÉLICE**
PROPELLERANTRIEBSEINHEIT, DIE EINEN VERBRENNUNGSMOTOR UND EINEN ELEKTROMOTOR UMFASST, SOWIE EINE SOLCHE PROPELLERANTRIEBSEINHEIT UMFASSENDES LUFTFAHRZEUG
PROPULSION UNIT WITH PROPELLER COMPRISING A THERMAL ENGINE AND AN ELECTRIC ENGINE AS WELL AS AIRCRAFT COMPRISING SUCH A PROPULSION UNIT WITH PROPELLER

(30) Priorité: 30.03.2018 FR 1852804
(43) Date de publication de la demande: 02.10.2019
(73) Titulaire: Airbus Operations, 31060 Toulouse (FR)
(72) Inventeur: LIEVEN, Patrick, 31620 FRONTON (FR); COLMAGRO, Jérôme, 31500 TOULOUSE (FR)
(74) Mandataire: Santarelli

(56) Documents cités:
- EP-A2- 2 226 487
- DE-A1-102010 021 026
- DE-A1-102014 224 637
- KR-A- 20160 010 355
- US-A1- 2014 010 652
- US-A1- 2015 075 167
- US-A1- 2017 225 573

## Description

La présente invention concerne une unité de propulsion à hélice, et en particulier une unité de propulsion à hélice d'aéronef.

Elle concerne également un aéronef comportant une telle unité de propulsion à hélice, par exemple un aéronef destiné au transport d'une charge utile, comme par exemple un aéronef civil destiné au transport de passagers et/ou au transport de fret.

De manière classique, un aéronef comporte un fuselage, une voilure et un empennage.

A l'avant du fuselage se trouve un cockpit.

Derrière le cockpit, le fuselage comporte une partie centrale destinée au transport d'une charge utile. Typiquement, une cabine pour recevoir des passagers se trouve dans la partie centrale du fuselage, avec éventuellement une soute pour transporter du fret. Cette partie centrale peut aussi être aménagée pour ne recevoir que du fret.

L'empennage est attaché à une partie arrière du fuselage. Cet empennage est classiquement associé à une dérive.

La partie arrière du fuselage est généralement dédiée au logement de compartiments techniques.

La voilure, dont la position et la forme dépendent de la conception de l'aéronef, est attachée au fuselage.

L'aéronef comporte généralement des moteurs, et par exemple deux moteurs fixés sous la voilure de l'aéronef.

Ces moteurs constituent les moyens de propulsion de l'aéronef et sont typiquement des moteurs à combustion internes, aussi dits moteurs thermiques, alimentés en carburant, lequel est stocké dans un réservoir de l'aéronef.

Dans un but de réduire la consommation de carburant et les émissions de dioxyde de carbone et autres polluants issus de la combustion pour un tel aéronef, la demande de brevet français n°1355610 déposée le 14 juin 2013 décrit un aéronef comprenant un moteur thermique consommant du carburant, tel qu'une turbine à gaz ou turbine à combustion, couplé à des moyens de propulsion électriques (qui comportent par exemple des moteurs électriques à hélice) disposés de chaque côté du fuselage (notamment sur la voilure), et à un générateur d'énergie électrique et des moyens de stockage et d'alimentation électrique qui sont disposés sensiblement dans un axe de symétrie longitudinal du fuselage.

Le document EP 2 226 487 A2 divulgue un moteur à turbine à gaz comprenant un rotor primaire et un système d'entraînement pour le rotor primaire, ledit système d'entraînement comprenant un arbre primaire agencé pour la transmission du couple d'une turbine audit rotor primaire et un générateur électrique qui est une première machine électrique et agencé pour être entraîné par ladite turbine, ledit moteur comprenant en outre un moteur électrique qui est une seconde machine électrique et agencé pour être entraîné par la sortie dudit générateur pour une application sélective du couple au rotor primaire. Le moteur possède également un embrayage agencé dans le trajet de force entre l'arbre primaire et le rotor primaire et servant sélectivement à désengager mécaniquement ledit arbre de la transmission de couple avec le rotor primaire de sortie de sorte que le rotor primaire puisse être entraîné lors de l'utilisation par l'un quelconque de la turbine et/ou du moteur électrique ou une combinaison de ceux-ci.

Une telle motorisation peut toutefois être améliorée, par exemple en termes de puissance pouvant être fournie, de facilité de maintenance ou d'ergonomie, ou encore de sécurité.

La présente invention vise ainsi à améliorer au moins une partie des aspects précités.

A cet effet, est proposé, selon un premier aspect, une unité de propulsion à hélice, comportant au moins un système cinématique comprenant au moins :
- un moteur thermique consommant du carburant et un arbre primaire entrainé en rotation en sortie du moteur thermique,
- un générateur d'énergie électrique configuré pour générer une énergie électrique à partir de la rotation de l'arbre primaire,
- un moteur électrique configuré pour générer un mouvement rotatif en sortie à partir de l'énergie électrique générée par le générateur d'énergie électrique,
- un dispositif d'entrainement et de sélection, comportant un élément d'accouplement configuré pour s'accoupler soit à l'arbre primaire soit à un élément rotatif en sortie du moteur électrique et un élément de guidage configuré pour au moins guider en rotation l'élément d'accouplement, configuré pour prendre au choix
   ∘ une première configuration dans laquelle il est accouplé en sortie du moteur électrique et
   ∘ une deuxième configuration dans laquelle il est accouplé à l'arbre primaire du moteur thermique,
- une hélice entrainée en rotation par le dispositif d'entrainement et de sélection, l'élément de guidage permettant d'adapter la vitesse de rotation de l'élément d'accouplement à une vitesse de rotation souhaitée pour l'hélice.

Ainsi, le moteur thermique et le générateur d'énergie électrique, d'une part, et le moteur électrique (aussi désigné « EPU » pour « Electrical Power Unit »), d'autre part, sont couplés et agencés derrière l'hélice.

En cas d'urgence ou de défaillance, il est ainsi possible de remplacer la source d'énergie électrique, c'est-à-dire l'EPU, par la source d'énergie thermique, c'est-à-dire le moteur thermique, grâce à la possibilité d'établir un lien direct entre l'arbre primaire et l'hélice par le dispositif d'entrainement et de sélection qui est configuré pour prendre chacune des deux configurations, mais l'une des deux à un moment donné.

Il est précisé que « direct » signifie ici « sans impliquer l'utilisation du moteur électrique ».

Une telle unité de propulsion à hélice est alors plus sure puisqu'elle permet de fournir de l'énergie à l'hélice au moyen de deux sources différentes : le moteur thermique et le moteur électrique.

De plus, alors qu'il s'agit d'une motorisation hybride, la possibilité d'établir un lien direct entre l'arbre rotatif du moteur thermique, c'est-à-dire l'arbre primaire, et l'hélice permet de fournir davantage d'énergie à l'hélice.

Un positionnement du moteur thermique derrière l'hélice dans le cadre d'une motorisation hybride permet aussi de réduire la trainée.

Ainsi, une telle unité de propulsion à hélice à motorisation hybride permet de fournir plus de puissance, et présente une facilité de maintenance et d'ergonomie, et est plus sure.

Le générateur d'énergie électrique est par exemple possiblement monté sur l'arbre primaire, voire traversé par l'arbre primaire.

Le moteur électrique configuré pour générer un mouvement rotatif en sortie comporte par exemple, en sortie, un arbre secondaire et/ou un pignon entrainé en rotation.

Par exemple, le moteur thermique consommant du carburant est un moteur thermique à combustion interne, tel qu'une turbine à gaz ou turbine à combustion.

L'élément d'accouplement est par exemple un élément dont au moins une partie est mobile entre une position dans laquelle il est accouplé à l'arbre primaire du moteur thermique et une position dans laquelle il est accouplé à la sortie du moteur électrique.

L'élément de guidage est un élément configuré pour au moins guider l'élément d'accouplement entre la configuration dans laquelle il est accouplé à l'arbre primaire du moteur thermique et la configuration dans laquelle il est accouplé à la sortie du moteur électrique, sans bloquer sa rotation.

Par exemple, le dispositif d'entrainement et de sélection comporte un réducteur.

Le réducteur est par exemple un train épicycloïdal.

Dans un exemple de réalisation, le système cinématique comporte en outre un conduit d'échappement de gaz, par exemple positionné en arrière du moteur thermique.

Par exemple, l'unité de propulsion à hélice comporte en outre des moyens de stockage et d'alimentation électrique configurés pour stocker l'énergie électrique générée par le générateur d'énergie électrique et pour alimenter en énergie électrique le moteur électrique.

Par exemple, l'unité de propulsion à hélice comporte en outre un redresseur configuré pour transformer un courant alternatif en sortie du générateur d'énergie électrique en courant continu.

Par exemple, le redresseur permet d'alimenter, voire par exemple charger, les moyens de stockage et d'alimentation électrique.

Par exemple, l'unité de propulsion à hélice comporte en outre un alternateur configuré pour transformer un courant continu en courant alternatif pour alimenter le moteur électrique.

Par exemple, le courant continu fourni à l'alternateur provient des moyens de stockage et d'alimentation électrique.

En d'autres termes, l'unité de propulsion à hélice comporte en outre un système électrique.

Le système électrique comporte principalement des éléments électriques et/ou électroniques.

Le système électrique est configuré pour transmettre de l'énergie électrique depuis le générateur d'énergie électrique au moteur électrique.

Il comporte par exemple au moins l'un des éléments précités, à savoir : des moyens de stockage et d'alimentation électrique, un redresseur, un alternateur.... Le système électrique peut aussi comporter les différents câbles utiles aux liaisons électriques souhaitées. En d'autre terme, le système électrique comporte différents éléments électriques et/ou électroniques utiles au fonctionnement de l'unité de propulsion à hélice.

L'unité de propulsion à hélice peut aussi comporter un système de refroidissement configuré pour abaisser en température au moins une partie du système cinématique et/ou du système électrique.

Est également proposé, selon un autre aspect, un aéronef comportant au moins une unité de propulsion à hélice.

L'unité de propulsion à hélice comporte au moins une partie des caractéristiques décrites précédemment.

Une unité de propulsion à hélice comportant au moins une partie des caractéristiques précédemment décrites, dans un aéronef, présente ainsi des avantages analogues à ceux décrits ci-dessus.

Dans le cas d'une installation dans un aéronef, il est en outre possible de réduire des renforts structuraux du fuselage du fait que l'installation du moteur thermique et du générateur électrique se fait alors hors du fuselage.

La réduction des renforts structuraux permet alors un allègement du fuselage.

Le système cinématique de l'unité de propulsion à hélice est par exemple installé à l'extérieur du fuselage de l'aéronef, par exemple sous voilure ou à l'arrière de l'aéronef.

Par exemple, l'aéronef comporte au moins une aile et le système cinématique est disposé sous l'aile.

Le système cinématique est par exemple fixé sous l'aile par une nacelle ou tout autre type d'attache.

Les accélérations des moteurs sont réduites par rapport à une installation arrière des moteurs (par exemple 2.5 G au lieu de 8 G).

L'installation du système cinématique est facilitée car elle s'apparente à une installation habituelle de moteur sous aile.

En outre, la maintenance est facilitée car au moins le moteur thermique étant positionné hors du fuselage, le système cinématique est plus facile d'accès et ce d'autant plus lorsqu'il est positionné sous aile par exemple. Il est ainsi possible d'accéder directement au système cinématique alors que lorsque le moteur thermique et le générateur sont positionnés dans le fuselage, il est nécessaire de procéder par une trappe d'accès.

Dans un exemple de réalisation, les moyens de stockage et d'alimentation électrique sont disposés dans le fuselage.

Dans une forme de réalisation, les moyens de stockage et d'alimentation électrique épousent une forme intérieure du fuselage.

Dans un exemple de réalisation, les moyens de stockage et d'alimentation électrique sont disposés à proximité du centre de gravité de l'aéronef équipé au moins du système cinématique.

Par exemple, en d'autres termes, une fois le système cinématique disposé dans l'aéronef, ou tous les systèmes cinématiques si plus sont prévus, par exemple sous aile, il est possible de déterminer un centre de gravité de l'aéronef, muni d'au moins le système cinématique, et alors définir où positionner les moyens de stockage et d'alimentation électrique, au plus près du centre de gravité dans la mesure du possible.

Le poids de l'aéronef muni d'une telle unité de propulsion à hélice est alors concentré vers un centre de gravité de l'aéronef.

Dans un exemple de réalisation, l'aéronef comporte en outre un moteur électrique à hélice.

Un moteur électrique à hélice désigne ici un moteur électrique (EPU) muni d'une hélice.

Dans un exemple de réalisation, le moteur électrique à hélice est aussi disposé sous une aile de l'aéronef.

Par exemple, le moteur thermique et le générateur d'énergie électrique de l'unité de propulsion à hélice sont configurés pour en outre fournir de l'énergie électrique au moteur électrique à hélice.

Dans un exemple de réalisation, l'aéronef comporte en outre un fuselage et le moteur électrique à hélice est disposé sous l'aile et le système cinématique est positionné entre le moteur électrique à hélice et le fuselage.

Autrement dit, au moins le système cinématique de l'unité de propulsion à hélice et un moteur électrique à hélice indépendant sont tous deux disposés sous une même aile de l'aéronef. Et par exemple, le système cinématique de l'unité de propulsion à hélice est disposé entre le fuselage et le moteur électrique à hélice.

En pratique, l'aéronef peut comprendre plusieurs moteurs électriques à hélice. Ils sont par exemple disposés symétriquement de chaque côté du fuselage, et par exemple sous chacune des ailes.

Par exemple, l'aéronef comporte un système cinématique de chaque côté du fuselage.

Dans un exemple de réalisation, l'aéronef peut comporter un système électrique commun aux systèmes cinématiques disposés de chaque côté du fuselage.

Ainsi, par exemple, les générateurs électriques de chacun des systèmes cinématiques alimentent les mêmes moyens de stockage et d'alimentation électrique.

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
La figure 1 montre schématiquement une architecture cinématique d'unité de propulsion à hélice selon un mode de mise en œuvre de l'invention,
La figure 2 montre schématiquement une architecture cinématique alternative au mode de mise en œuvre de la figure 1,
La figure 3 montre schématiquement une unité de propulsion à hélice selon un exemple de réalisation de l'invention,
La figure 4 illustre le système cinématique de l'unité de propulsion à hélice de la figure 3 adjoint d'un moteur électrique à hélice alimenté par le moteur thermique et le générateur d'énergie électrique du système cinématique,
La figure 5 présente un schéma cinématique d'un mode de réalisation du système cinématique de l'unité de propulsion à hélice selon l'invention et un exemple de diagramme bloc de l'unité de propulsion à hélice,
Les figures 6 et 7 présentent une maquette numérique correspondant au système cinématique de l'unité de propulsion à hélice de la figure 3, le système cinématique étant dépourvu de l'hélice sur la figure 6 par rapport à la figure 7,
La figure 8 est une vue partiellement en transparence de la maquette numérique de la figure 7,
La figure 9 présentent un aéronef en trois dimensions selon un exemple de mise en œuvre de l'invention,
La figure 10 présentent un aéronef en trois dimensions selon un autre exemple de mise en œuvre de l'invention, et
Les figures 11 et 12 illustrent des exemples de systèmes d'attache pour fixer un système cinématique d'une unité de propulsion à hélice selon un exemple de réalisation de l'invention sous une aile d'aéronef.

Les éléments identiques représentés sur les figures précitées sont identifiés par des références numériques identiques.

Dans la description qui suit, les termes "avant" et "arrière" se réfèrent à l'unité de propulsion à hélice telle qu'elle serait disposée dans un aéronef et/ou à l'aéronef et à son sens de déplacement en vol.

Les notions de positions relatives, inférieure et supérieure, se repèrent par exemple lorsque l'aéronef est en vol de croisière ou lorsqu'il est posé au sol.

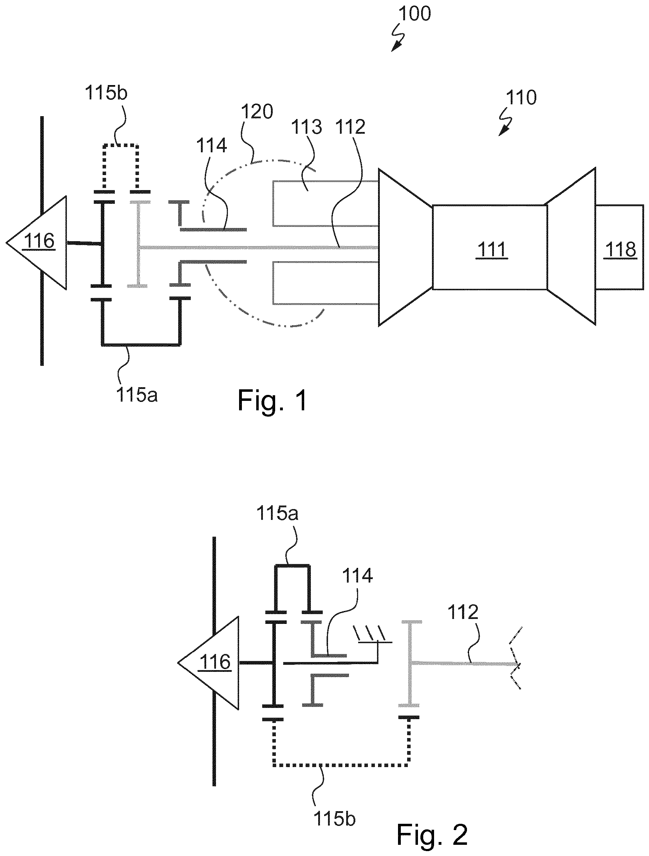

La figure 1 présente de manière schématique le principe général d'une unité de propulsion à hélice 100 selon l'invention.

L'unité de propulsion à hélice 100 comporte par définition au moins un système cinématique 110 et un système électrique 120.

Le système cinématique comporte l'hélice et les principaux éléments positionnés en arrière de l'hélice et à laquelle ils sont rattachés mécaniquement, voire aussi cinématiquement.

Le système cinématique 110 comporte au moins :
- un moteur thermique 111 consommant du carburant avec un arbre primaire 112 entrainé en rotation en sortie du moteur thermique, par exemple selon un vitesse angulaire notée « w »,
- un générateur d'énergie électrique 113 configuré pour générer une énergie électrique à partir de la rotation de l'arbre primaire 112,
- un moteur électrique 114 configuré pour générer un mouvement rotatif en sortie (par exemple par tout type d'élément rotatif), à partir de l'énergie électrique générée par le générateur d'énergie électrique 113 et qui lui est transmise,
- un dispositif d'entrainement et de sélection (référencé par la suite 115 mais dont seul les configurations énoncées ci-dessous le représentent sur cette figure) configuré pour prendre :
   - une première configuration 115a dans laquelle il est accouplé en sortie du moteur électrique 114 et
   - une deuxième configuration 115b dans laquelle il est accouplé à l'arbre primaire 112, et
- une hélice 116 entrainée en rotation par le dispositif d'entrainement et de sélection 115.

Le moteur thermique 111 consommant du carburant est par exemple un moteur thermique à combustion interne, tel qu'une turbine à gaz ou turbine à combustion.

Le système électrique 120 comporte principalement des éléments électriques et/ou électroniques.

Le système électrique 120 est configuré pour transmettre de l'énergie électrique depuis le générateur d'énergie électrique 113 au moteur électrique 114.

Il comporte par exemple au moins des câbles ou autres éléments de liaison, référencés indifféremment par la référence 124, permettant de transmettre de l'énergie électrique depuis le générateur d'énergie électrique 113 au moteur électrique 114.

Ainsi, en conditions dites « normales » d'utilisation, la première configuration 115a est impliquée, alors qu'en cas de besoin de surpuissance, par exemple lors d'un décollage d'un aéronef ou d'une manœuvre spéciale, ou en cas d'urgence, par exemple en cas de défaillance du moteur électrique et/ou du générateur, la deuxième configuration 115b peut être mise en fonctionnement.

Le dispositif d'entrainement et de sélection 115 est donc configuré pour prendre au choix chacune des deux configurations.

L'exemple de réalisation de la figure 1 illustre une architecture cinématique en série dans laquelle l'arbre primaire 112 traverse le générateur d'énergie électrique 113 puis le moteur électrique 114. En d'autres termes, le moteur électrique 114 et le générateur d'énergie électrique 113 sont montés sur l'arbre primaire 112 et le générateur d'énergie électrique est positionné entre le moteur électrique 114 et le moteur thermique 111. Autrement dit, le générateur d'énergie électrique 113 est ici monté en sortie du moteur thermique 111.

De plus, l'arbre primaire 112 comporte par exemple un pignon, ou tout autre type de roue dentée (incluant même une couronne), configuré pour s'accoupler à un élément d'accouplement du dispositif d'entrainement et de sélection 115 dans la deuxième configuration 115b.

Dans l'exemple de réalisation de la figure 1, le pignon, ou tout autre type de roue dentée (incluant même une couronne), de l'arbre primaire 112 est alors situé entre l'hélice 116 et l'élément rotatif en sortie du moteur électrique 114.

L'élément rotatif en sortie du moteur électrique 114 est par exemple un arbre, dit ici arbre secondaire, éventuellement muni d'un pignon, ou tout autre type de roue dentée (incluant même une couronne).

L'élément rotatif en sortie du moteur électrique 114 est par exemple l'élément configuré pour s'accoupler à un élément d'accouplement du dispositif d'entrainement et de sélection 115 dans la première configuration 115a.

Ainsi, le dispositif d'entrainement et de sélection 115 comporte au moins un élément d'accouplement configuré pour s'accoupler soit à l'arbre primaire 112 soit à l'élément rotatif en sortie du moteur électrique 114.

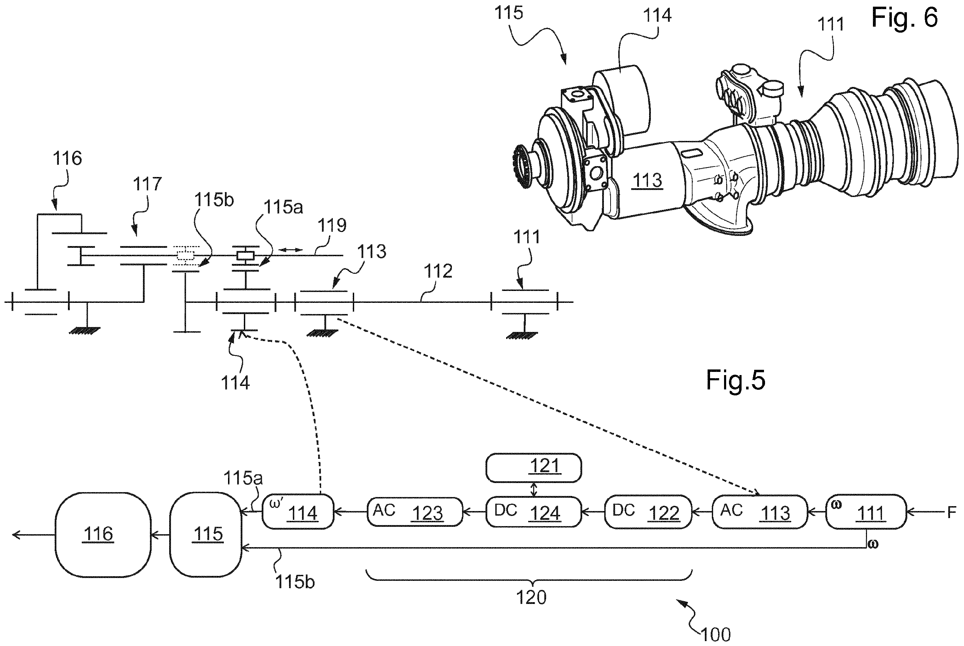

Dans un exemple de réalisation illustré en figure 5 par exemple, il peut s'agir d'un seul élément d'accouplement (référencé 119 sur cette figure 5) configuré pour prendre deux positions (115a ou 115b, dans laquelle il est partiellement représenté en pointillés) lui permettant d'être accouplé avec l'un ou l'autre de l'arbre primaire 112 ou de la sortie du moteur électrique 114.

L'exemple de réalisation de la figure 2 présente une variante de celui de la figure 1. Il diffère en ce que le moteur électrique 114 est monté sur un stator indépendant de l'arbre primaire 112. Dans cet exemple, au moins l'élément rotatif en sortie du moteur électrique 114 est positionné entre l'hélice 116 et le pignon, ou tout autre type de roue dentée (incluant même une couronne), de l'arbre primaire 112.

Dans un autre exemple de réalisation, l'élément rotatif en sortie du moteur électrique et le pignon, ou tout autre type de roue dentée (incluant même une couronne), de l'arbre primaire 112 pourraient toutefois être à une même distance derrière l'hélice pour entraîner l'hélice.

Le générateur d'énergie électrique 113 alimenté par le moteur thermique 111 est uniquement dédié à la production d'électricité et ne produit pas de poussée utile dans le système cinématique 110 de l'unité de propulsion à hélice 100.

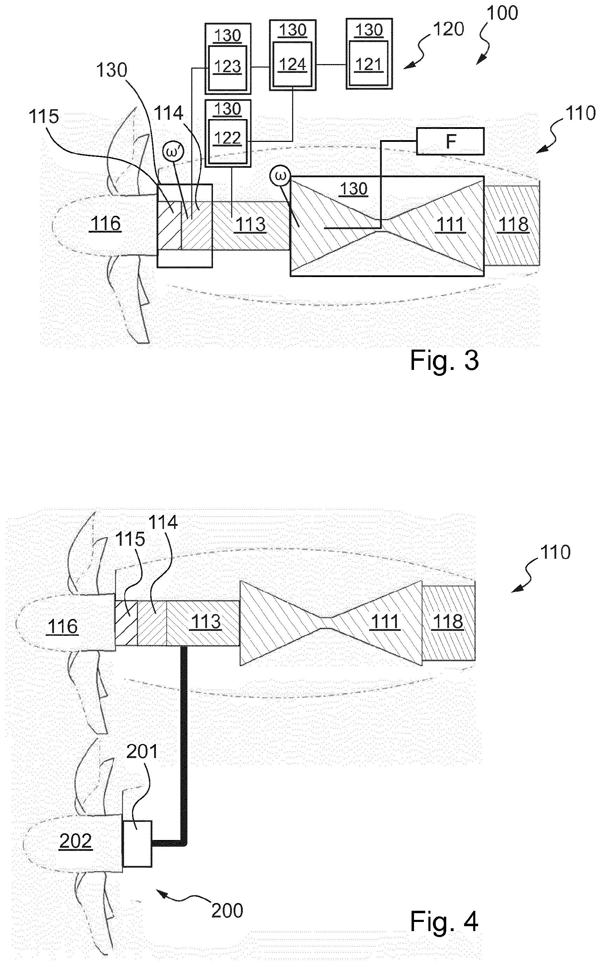

La figure 3 présente schématiquement de manière plus complète une unité de propulsion à hélice 100 selon un exemple de réalisation de l'invention.

L'un ou l'autre des agencements présentés en figures 1 et 2 peuvent être utilisés.

Cette figure illustre en outre le fait que le moteur thermique 111 est alimenté en carburant F (lequel est généralement stocké dans un réservoir indépendant de l'unité de propulsion à hélice décrite ici).

Le système cinématique peut aussi comporter un conduit d'échappement de gaz 118.

Un tel conduit d'échappement de gaz 118 est typiquement positionné en arrière du moteur thermique 111.

En particulier, une surface interne du conduit d'échappement de gaz 118 (c'est-à-dire celle destinée à être en contact avec des gaz d'échappement) peut présenter une surface active de traitement des gaz d'échappement afin de diminuer l'émission de polluants dans l'atmosphère.

La surface active du conduit d'échappement de gaz interagit avec les gaz d'échappement pour les traiter.

A titre d'exemple, cette surface active peut être réalisée par dépôt catalytique similaire à ceux utilisés dans les pots d'échappement des véhicules automobiles.

Une telle surface active est adaptée à traiter directement les gaz d'échappement en sortie du moteur thermique, et notamment les gaz issus de la combustion d'une turbine.

Cette figure 3 permet en outre d'illustrer le principe d'agencement du système électrique 120 par rapport au système cinématique 110.

Sur cette figure, le système électrique 120 comporte, par définition :
- un redresseur 122 configuré pour transformer un courant alternatif en sortie du générateur d'énergie électrique 113 en courant continu,
- des moyens de stockage et d'alimentation électrique 121 configurés pour stocker l'énergie électrique générée par le générateur d'énergie électrique 113 et pour alimenter en énergie électrique le moteur électrique 114,
- un alternateur 123 configuré pour transformer un courant continu, notamment issu des moyens de stockage et d'alimentation électrique 121, en courant alternatif pour alimenter le moteur électrique 114 et
- des câbles ou autres éléments de liaison, référencés indifféremment par la référence 124, permettant de transmettre de l'énergie électrique depuis le générateur d'énergie électrique 113 au moteur électrique 114, et en particulier entre le redresseur 122 et les moyens de stockage et d'alimentation électrique 121 et entre les moyens de stockage et d'alimentation électrique 121 et l'alternateur 123, ainsi qu'entre le générateur d'énergie électrique 113 et le redresseur 122 et entre l'alternateur 123 et le moteur électrique 114.

Bien entendu cette disposition n'est pas limitative et le système électrique 120 peut comporter d'autres éléments.

Ainsi, le générateur d'énergie électrique 113 est adapté à alimenter les moyens de stockage et d'alimentation électrique 121.

Les moyens de stockage et d'alimentation électrique 121 sont par exemple constitués d'au moins une batterie adaptée à stocker l'énergie électrique provenant du générateur d'énergie électrique 113. Il s'agit par exemple de plusieurs batteries en parallèle.

Les moyens de stockage et d'alimentation électrique 121 sont utilisés pour alimenter en courant électrique au moins le moteur électrique 114.

De préférence, ils servent aussi à assurer une alimentation électrique suffisante du moteur électrique en cas de panne du générateur d'énergie électrique 113.

Enfin, la figure 3 illustre aussi le fait que l'unité de propulsion à hélice peut comporter un système de refroidissement 130.

Le système de refroidissement 130 est configuré pour refroidir au moins une partie du système cinématique 110 et/ou du système électrique 120.

La figure 4 montre un exemple particulier d'agencement comportant une unité de propulsion à hélice selon un exemple de réalisation de l'invention, par exemple tel que décrit précédemment, et un moteur électrique à hélice 200, en vue de leur implantation dans un aéronef.

Le moteur électrique à hélice 200 comporte ici un moteur électrique 201 et une hélice 202, ainsi qu'éventuellement tout élément (comme par exemple un train d'engrenage) utile à l'adaptation de la vitesse de rotation entre une sortie du moteur électrique et l'hélice. En outre, le moteur électrique à hélice 200 désigne ici une unité dépourvue d'un moteur thermique propre.

Ainsi, au moins le générateur d'énergie électrique 113 du système cinématique 110 de l'unité de propulsion à hélice selon l'invention est configuré pour alimenter le moteur électrique à hélice 200, en plus du moteur électrique 114 du système cinématique 110 de l'unité de propulsion à hélice même. Ainsi, en d'autres termes par exemple, le générateur d'énergie électrique 113 alimentent alors deux moteurs électriques.

A cet effet, le générateur d'énergie électrique 113 est relié électriquement, par au moins une liaison électrique (laquelle est ici représenté schématiquement par un trait épais), au moteur électrique 201 du moteur électrique à hélice 200.

Dans un exemple de réalisation, le système électrique 120 de l'unité de propulsion à hélice 100 comporte une liaison électrique supplémentaire configurée pour connecter les moyens de stockage et d'alimentation électrique 121, voire l'alternateur 123, au moteur électrique 201 du moteur électrique à hélice 200.

La figure 5 représente d'une part un exemple de schéma cinématique et d'autre part un diagramme bloc illustrant le fonctionnement de l'unité de propulsion à hélice.

D'après ce schéma cinématique, le moteur thermique 111 entraine en rotation l'arbre primaire 112.

L'arbre primaire 112 traverse le générateur d'énergie électrique 113 et le moteur électrique 114 et comporte, ici au-delà du moteur électrique 114, une roue dentée, de type pignon par exemple. Le générateur d'énergie électrique 113 et le moteur électrique 114 sont par exemple reliés à l'arbre primaire 112 par des liaisons pivots.

Comme illustré, le moteur thermique 111 et le générateur d'énergie électrique 113 sont fixes, par exemple par rapport à une référence (celle-ci pouvant être un carter par exemple, et/ou un aéronef dans lequel ils sont disposés).

Le moteur électrique 114 alimenté par le générateur d'énergie électrique 113 est ici représenté par son élément rotatif en sortie, par exemple une roue dentée (par exemple de type pignon).

Le dispositif d'entrainement et de sélection 115 comporte ici un élément d'accouplement 119.

Comme évoqué précédemment, l'élément d'accouplement 119 est configuré pour s'accoupler soit à l'arbre primaire 112, en particulier ici à sa roue dentée, soit à l'élément rotatif en sortie du moteur électrique 114, en particulier ici à sa roue dentée.

L'élément d'accouplement 119 comporte ici par exemple un arbre muni d'une roue dentée, laquelle, par translation de l'arbre et/ou de la roue dentée par rapport à l'arbre, peut s'accoupler soit à la roue dentée de l'arbre primaire (deuxième configuration 115b dans laquelle la roue dentée est représentée en pointillés), soit à la roue dentée en sortie du moteur électrique 114 (première configuration 115a dans laquelle la roue dentée est représentée en trait plein).

Ainsi, ceci illustre que de manière générale, le dispositif d'entrainement et de sélection 115 peut comporter un seul élément d'accouplement 119 configuré pour prendre la première configuration 115a ou la deuxième configuration 115b.

En outre, comme illustré sur cette figure, le dispositif d'entrainement et de sélection 115 peut aussi comporter un élément de guidage 117.

Par souci de simplification de la figure, le dispositif d'entrainement et de sélection 115 est ici représenté très schématiquement par l'élément de guidage 117 et l'élément d'accouplement 119.

L'élément de guidage 117, schématisé ici de manière très simplifiée, permet par exemple d'adapter la vitesse de rotation de l'élément d'accouplement 119 à une vitesse de rotation souhaitée pour l'hélice 116.

A titre d'exemple, l'hélice 116 comporte ici une couronne configurée pour s'accoupler en sortie du dispositif d'entrainement et de sélection 115. Dans un exemple particulier, l'hélice peut être accouplée en sortie de l'arbre de l'élément d'accouplement 119 par exemple. L'hélice est par exemple reliée par une liaison pivot à un axe fixe, par exemple par rapport à une référence (celle-ci pouvant être un carter par exemple et/ou l'aéronef, voire le même que celui mentionné précédemment).

Le diagramme bloc de la figure 5 permet d'illustrer le fonctionnement d'une unité de propulsion à hélice selon l'invention d'un point de vue « électrique », bien que par clarté des éléments cinématiques soient représentés.

Ainsi, du carburant F est injecté dans le moteur thermique 111 lequel en entrainant en rotation l'arbre primaire (à vitesse angulaire w par exemple) alimente le générateur d'énergie électrique 113 qui génère un courant alternatif (AC).

La redresseur 122 transforme le courant alternatif (AC) en courant continu (DC) lequel est acheminé vers les moyens de stockage et d'alimentation électrique 121 au moyen de câbles ou autres éléments de liaison, référencés indifféremment par la référence 124.

Les moyens de stockage et d'alimentation électrique 121 fournissent un courant continu (DC) à l'alternateur 123 qui transforme ce courant continu (DC) en courant alternatif (AC) pour alimenter le moteur électrique 114.

Le moteur électrique 114 fournit ensuite en sortie un mouvement rotatif, par exemple à vitesse angulaire ω', qui peut néanmoins être la même que celle du moteur thermique.

Le dispositif d'entrainement et de sélection 115 est configuré pour prendre une première configuration 115a dans laquelle il est accouplé en sortie du moteur électrique 114 et une deuxième configuration 115b dans laquelle il est accouplé en sortie du moteur thermique 111 (soit notamment à l'arbre primaire).

Enfin, l'hélice 116 est entrainée en rotation par le dispositif d'entrainement et de sélection 115.

Les figures 6 à 8 permettent de représenter une maquette numérique correspondant au système cinématique de l'unité de propulsion à hélice de la figure 3, en particulier selon l'agencement de la figure 2, c'est-à-dire où le moteur électrique 114 est monté sur un stator indépendant de l'arbre primaire 112.

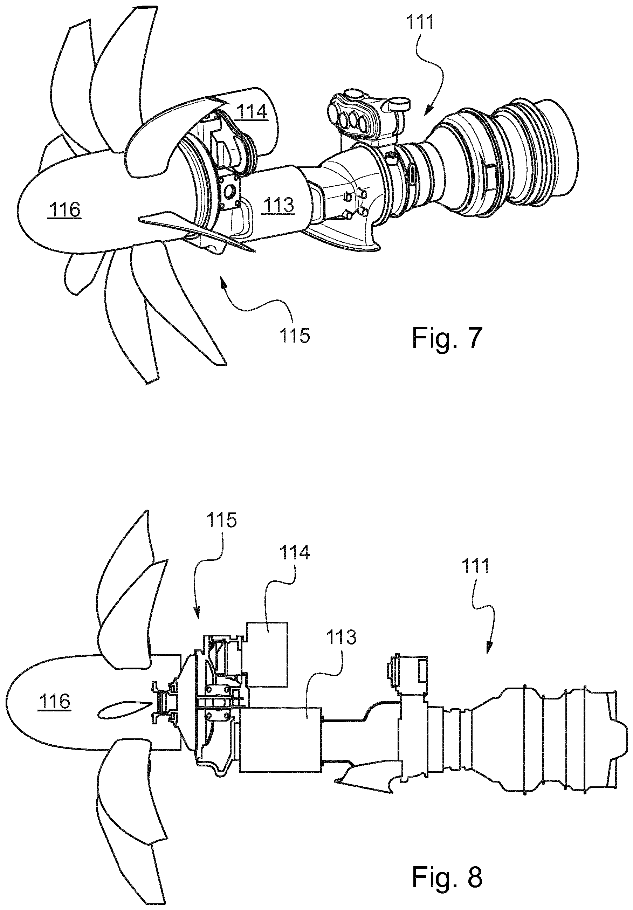

Les figures 6 et 8 permettent de montrer que le dispositif d'entrainement et de sélection 115 comporte une sortie à laquelle l'hélice est accouplée.

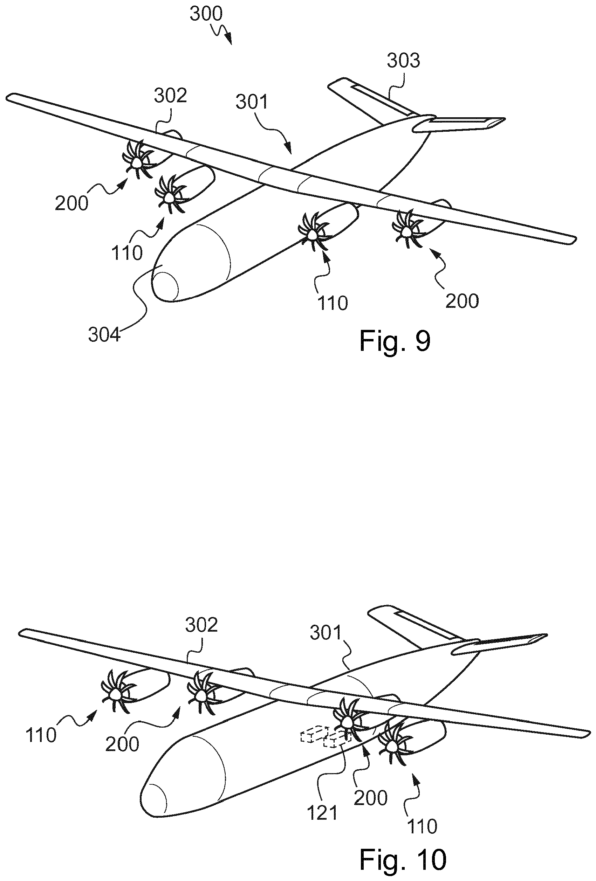

Les figures 9 et 10 présentent un aéronef selon un exemple de réalisation de l'invention.

A titre d'exemple non limitatif, l'aéronef décrit ci-après est un aéronef transsonique destiné au transport de passagers, et par exemple permettant, dans certaines configurations d'aménagement intérieur, le transport d'au moins cent passagers.

Toutefois, la présente invention ne se limite pas à un tel aéronef et peut également concerner des aéronefs appelés le plus couramment « avion-cargo ».

Comme bien illustré sur les figures, l'aéronef 300 comporte principalement un fuselage 301 et une voilure attachée au fuselage.

La voilure comporte deux ailes 302 s'étendant symétriquement de part et d'autre du fuselage 301.

Le fuselage comporte une partie avant, une partie centrale et une partie arrière.

Un empennage 303 est attaché au fuselage 301 en particulier à sa partie arrière.

La partie avant du fuselage comporte ici un cockpit 304 à l'intérieur duquel se trouve un poste de pilotage. Ce dernier comporte notamment tous les éléments de commande pour le pilotage de l'aéronef, des écrans de contrôle, des moyens de communication, ...

Bien entendu, le cockpit peut être disposé ailleurs que dans la partie avant du fuselage. La partie avant du fuselage peut alors être destinée au transport d'une charge utile.

La partie centrale du fuselage est principalement destinée au transport d'une charge utile.

Si la charge utile est essentiellement composée de passagers, la partie centrale du fuselage comporte alors principalement une cabine destinée à recevoir les passagers et une soute pour recevoir les bagages des passagers et éventuellement d'autres marchandises, aménagée sous la cabine.

Une telle configuration est tout à fait classique dans un aéronef et n'a pas besoin d'être détaillée ici.

Comme illustré sur les figures 9 et 10, l'aéronef 300 comporte une unité de propulsion à hélice comportant au moins une partie des caractéristiques décrites précédemment.

A titre d'exemple non limitatif, le moteur thermique est par exemple une turbine à gaz utilisant comme combustible un carburant embarqué dans l'aéronef, et typiquement du kérosène stocké dans un réservoir de l'aéronef.

Sur ces figures, le système cinématique 110 de l'unité de propulsion à hélice est disposé sous une aile 302.

En particulier, l'aéronef comporte ici un système cinématique 110 sous chaque aile 302, de part et d'autre du fuselage 301.

L'aéronef comporte en outre un moteur électrique à hélice 200 et en particulier ici un moteur électrique à hélice 200 sous chaque aile 302, de part et d'autre du fuselage 301.

De plus, comme décrit en lien avec la figure 4, chaque moteur électrique à hélice 200 est alimenté par les moyens de stockage et d'alimentation électrique 121 qui sont chargés par le générateur d'énergie électrique 113 de chacun des systèmes cinématiques 110 disposés dans l'aéronef.

En outre, comme l'illustre la figure 10, les moyens de stockage et d'alimentation électrique 121 sont disposés dans le fuselage, à proximité du centre de gravité de l'aéronef.

Dans l'exemple de réalisation de la figure 9, sous chacune des ailes 302, chaque système cinématique 110 est positionné entre le moteur électrique à hélice 200 correspondant et le fuselage 301.

Cette configuration permet une meilleure répartition des charges.

En alternative, dans l'exemple de réalisation de la figure 10, sous chacune des ailes 302, chaque moteur électrique à hélice 200 est positionné entre le fuselage 301 et le système cinématique 110 correspondant.

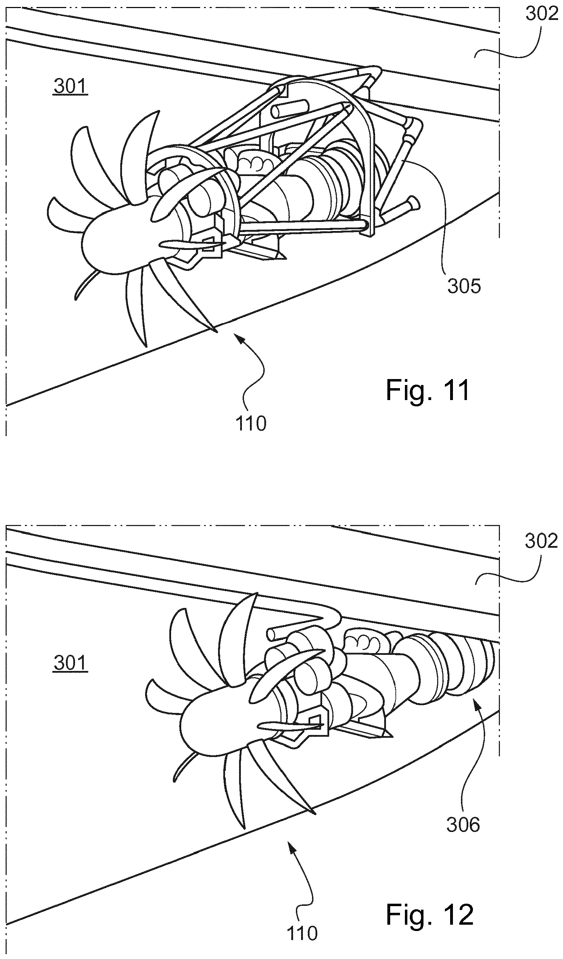

Enfin les figures 11 et 12 illustrent des moyens de fixation d'un système cinématique 110 selon l'invention sous une aile 302.

Dans l'exemple de la figure 11 il s'agit d'une nacelle 305 alors que dans l'exemple de la figure 12 il peut s'agir d'une attache de type « turbofan » 306.

Il s'agit par exemple d'un moyen connu des hommes du métier basé sur le principe d'attache d'un mât sous voilure pour un turboréacteur.

## Revendications

1. Unité de propulsion à hélice (100), comportant au moins un système cinématique (110) comprenant au moins :
• un moteur thermique (111) consommant du carburant et un arbre primaire (112) entrainé en rotation en sortie du moteur thermique,
• un générateur d'énergie électrique (113) configuré pour générer une énergie électrique à partir de la rotation de l'arbre primaire (112),
• un moteur électrique (114) configuré pour générer un mouvement rotatif en sortie à partir de l'énergie électrique générée par le générateur d'énergie électrique (113), **caractérisé en ce qu'**elle comprend :
• un dispositif d'entrainement et de sélection (115), comportant un élément d'accouplement (119) configuré pour s'accoupler soit à l'arbre primaire (112) soit à un élément rotatif en sortie du moteur électrique (114) et un élément de guidage (117) configuré pour au moins guider en rotation l'élément d'accouplement (119), configuré pour prendre au choix
• une première configuration (115a) dans laquelle il est accouplé en sortie du moteur électrique (114) et
• une deuxième configuration (115b) dans laquelle il est accouplé à l'arbre primaire (112) du moteur thermique,
• une hélice (116) entrainée en rotation par le dispositif d'entrainement et de sélection (115), l'élément de guidage (117) permettant d'adapter la vitesse de rotation de l'élément d'accouplement (119) à une vitesse de rotation souhaitée pour l'hélice (116).

2. Unité de propulsion à hélice selon la revendication 1, **caractérisée en ce que** l'élément d'accouplement (119) est un élément dont au moins une partie est mobile entre une position dans laquelle il est accouplé à l'arbre primaire (112) du moteur thermique (111) et une position dans laquelle il est accouplé à la sortie du moteur électrique (114).

3. Unité de propulsion à hélice selon l'une quelconque des revendications 1 ou 2, **caractérisée en ce que** l'élément de guidage est un élément configuré pour au moins guider l'élément d'accouplement (119) entre la configuration dans laquelle il est accouplé à l'arbre primaire (112) du moteur thermique (111) et la configuration dans laquelle il est accouplé à la sortie du moteur électrique (114), sans bloquer sa rotation.

4. Unité de propulsion à hélice selon l'une quelconque des revendications 1 à 3, **caractérisée en ce que** le moteur thermique (111) consommant du carburant est un moteur thermique à combustion interne, tel qu'une turbine à gaz ou turbine à combustion.

5. Unité de propulsion à hélice selon l'une quelconque des revendications 1 à 4, **caractérisée en ce qu'**elle comporte en outre des moyens de stockage et d'alimentation électrique (121) configurés pour stocker l'énergie électrique générée par le générateur d'énergie électrique (113) et pour alimenter en énergie électrique le moteur électrique (114).

6. Unité de propulsion à hélice selon l'une quelconque des revendications 1 à 5, **caractérisée en ce qu'**elle comporte en outre un redresseur (122) configuré pour transformer un courant alternatif en sortie du générateur d'énergie électrique (113) en courant continu, et un alternateur (123) configuré pour transformer un courant continu en courant alternatif pour alimenter le moteur électrique (114).

7. Aéronef (300) comportant au moins une unité de propulsion à hélice (100) selon l'une quelconque des revendications 1 à 6.

8. Aéronef (300) selon la revendication 7, **caractérisé en ce qu'**il comporte au moins une aile (302) et **en ce que** le système cinématique (110) est disposé sous l'aile.

9. Aéronef (300) selon l'une quelconque des revendications 7 ou 8, **caractérisé en ce que** les moyens de stockage et d'alimentation électrique sont disposés dans un fuselage (301) de l'aéronef.

10. Aéronef (300) selon l'une quelconque des revendications 7 à 9, **caractérisé en ce que** les moyens de stockage et d'alimentation électrique (121) sont disposés à proximité du centre de gravité de l'aéronef équipé au moins du système cinématique (110).

11. Aéronef (300) selon l'une des revendications 7 à 10, **caractérisé en ce qu'**il comporte en outre un moteur électrique à hélice (200) et **en ce que** le moteur thermique (111) et le générateur d'énergie électrique (113) de l'unité de propulsion à hélice (100) sont configurés pour en outre fournir de l'énergie électrique au moteur électrique à hélice (200).

12. Aéronef (300) selon la revendication 11, **caractérisé en ce qu'**il comporte en outre un fuselage (301) et **en ce que** le moteur électrique à hélice (200) est disposé sous l'aile (302) et **en ce que** le système cinématique (110) est positionné entre le moteur électrique à hélice (200) et le fuselage (301).

## Patentansprüche

1. Propellerantriebseinheit (100), die mindestens ein Kinematiksystem (110) aufweist, das mindestens enthält:
• einen Treibstoff verbrauchenden Wärmekraftmotor (111) und eine Primärwelle (112), die am Ausgang des Wärmekraftmotors in Drehung versetzt wird,
• einen Elektroenergieerzeuger (113), der konfiguriert ist, eine elektrische Energie ausgehend von der Drehung der Primärwelle (112) zu erzeugen,
• einen Elektromotor (114), der konfiguriert ist, eine Drehbewegung am Ausgang ausgehend von der vom Elektroenergieerzeuger (113) erzeugten elektrischen Energie zu erzeugen,
**dadurch gekennzeichnet, dass** sie enthält:
• eine Antriebs- und Auswahlvorrichtung (115), die ein Kupplungselement (119), das konfiguriert ist, sich entweder an die Primärwelle (112) oder an ein drehendes Element am Ausgang des Elektromotors (114) anzukuppeln, und ein Führungselement (117) aufweist, das konfiguriert ist, das Kupplungselement (119) zumindest in Drehung zu führen, damit es wahlweise annimmt
• eine erste Konfiguration (115a), in der es am Ausgang des Elektromotors (114) angekuppelt ist, und
• eine zweite Konfiguration (115b), in der es an die Primärwelle (112) des Wärmekraftmotors angekuppelt ist,
• einen Propeller (116), der von der Antriebs- und Auswahlvorrichtung (115) in Drehung versetzt wird, wobei das Führungselement (117) es ermöglicht, die Drehgeschwindigkeit des Kupplungselements (119) an eine für den Propeller (116) gewünschte Drehgeschwindigkeit anzupassen.

2. Propellerantriebseinheit nach Anspruch 1, **dadurch gekennzeichnet, dass** das Kupplungselement (119) ein Element ist, von dem mindestens ein Teil zwischen einer Stellung, in der es an die Primärwelle (112) des Wärmekraftmotors (111) angekuppelt ist, und einer Stellung beweglich ist, in der es an den Ausgang des Elektromotors (114) angekuppelt ist.

3. Propellerantriebseinheit nach einem der Ansprüche 1 oder 2, **dadurch gekennzeichnet, dass** das Führungselement ein Element ist, das konfiguriert ist, mindestens das Kupplungselement (119) zwischen der Konfiguration, in der es an die Primärwelle (112) des Wärmekraftmotors (111) angekuppelt ist, und der Konfiguration zu führen, in der es an den Ausgang des Elektromotors (114) angekuppelt ist, ohne seine Drehung zu blockieren.

4. Propellerantriebseinheit nach einem der Ansprüche 1 bis 3, **dadurch gekennzeichnet, dass** der Treibstoff verbrauchende Wärmekraftmotor (111) ein Wärmekraftmotor mit innerer Verbrennung wie eine Gasturbine oder eine Verbrennungsturbine ist.

5. Propellerantriebseinheit nach einem der Ansprüche 1 bis 4, **dadurch gekennzeichnet, dass** sie außerdem Stromspeicher- und Versorgungseinrichtungen (121) aufweist, die konfiguriert sind, die vom Elektroenergieerzeuger (113) erzeugte elektrische Energie zu speichern und den Elektromotor (114) mit elektrischer Energie zu versorgen.

6. Propellerantriebseinheit nach einem der Ansprüche 1 bis 5, **dadurch gekennzeichnet, dass** sie außerdem einen Gleichrichter (122), der konfiguriert ist, einen Wechselstrom am Ausgang des Elektroenergieerzeugers (113) in Gleichstrom umzuwandeln, und einen Wechselrichter (123) aufweist, der konfiguriert ist, einen Gleichstrom in einen Wechselstrom umzuwandeln, um den Elektromotor (114) zu versorgen.

7. Luftfahrzeug (300), das mindestens eine Propellerantriebseinheit (100) nach einem der Ansprüche 1 bis 6 aufweist.

8. Luftfahrzeug (300) nach Anspruch 7, **dadurch gekennzeichnet, dass** es mindestens einen Flügel (302) aufweist, und dass das Kinematiksystem (110) unter dem Flügel angeordnet ist.

9. Luftfahrzeug (300) nach einem der Ansprüche 7 oder 8, **dadurch gekennzeichnet, dass** die Stromspeicher- und Versorgungseinrichtungen in einem Rumpf (301) des Luftfahrzeugs angeordnet sind.

10. Luftfahrzeug (300) nach einem der Ansprüche 7 bis 9, **dadurch gekennzeichnet, dass** die Stromspeicher- und Versorgungseinrichtungen (121) in der Nähe des Schwerpunkts des Luftfahrzeugs angeordnet sind, das mindestens mit dem Kinematiksystem (110) ausgestattet ist.

11. Luftfahrzeug (300) nach einem der Ansprüche 7 bis 10, **dadurch gekennzeichnet, dass** es außerdem einen elektrischen Propellermotor (200) aufweist, und dass der Wärmekraftmotor (111) und der Elektroenergieerzeuger (113) der Propellerantriebseinheit (100) konfiguriert sind, außerdem elektrische Energie an den elektrischen Propellermotor (200) zu liefern.

12. Luftfahrzeug (300) nach Anspruch 11, **dadurch gekennzeichnet, dass** es außerdem einen Rumpf (301) aufweist, und dass der elektrische Propellermotor (200) unter dem Flügel (302) angeordnet ist, und dass das Kinematiksystem (110) zwischen dem elektrischen Propellermotor (200) und dem Rumpf (301) positioniert ist.

## Claims

1. Propeller propulsion unit (100), having at least one kinematic system (110) comprising at least:
• a heat engine (111) consuming fuel and a main shaft (112) driven in rotation at the output of the heat engine,
• an electrical energy generator (113) configured to generate electrical energy from the rotation of the main shaft (112),
• an electric motor (114) configured to generate a rotary movement as output from the electrical energy generated by the electrical energy generator (113), **characterised in that** it comprises:
• a drive and selection device (115) having a coupling element (119) configured to be coupled either to the main shaft (112) or to a rotary element at the output of the electric motor (114) and a guiding element (117) configured to at least rotationally guide the coupling element (119), configured to assume, as required
• a first configuration (115a), in which it is coupled to the output of the electric motor (114), and
• a second configuration (115b), in which it is coupled to the main shaft (112) of the heat engine,
• a propeller (116) driven in rotation by the drive and selection device (115), the guiding element (117) allowing the rotation speed of the coupling element (119) to be adapted to a desired rotation speed for the propeller (116).

2. Propeller propulsion unit according to Claim 1, **characterised in that** the coupling element (119) is an element with at least one part that can move between a position in which it is coupled to the main shaft (112) of the heat engine (111) and a position in which it is coupled to the output of the electric motor (114).

3. Propeller propulsion unit according to either of Claims 1 and 2, **characterised in that** the guiding element is an element configured to at least guide the coupling element (119) between the configuration in which it is coupled to the main shaft (112) of the heat engine (111) and the configuration in which it is coupled to the output of the electric motor (114), without blocking its rotation.

4. Propeller propulsion unit according to any one of Claims 1 to 3, **characterised in that** the heat engine (111) consuming fuel is an internal combustion heat engine, such as a gas turbine or a combustion turbine.

5. Propeller propulsion unit according to any one of Claims 1 to 4, **characterised in that** it further comprises electrical storage and power supply means (121) configured to store the electrical energy generated by the electrical energy generator (113) and to supply the electric motor (114) with electrical energy.

6. Propeller propulsion unit according to any one of Claims 1 to 5, **characterised in that** it further comprises a rectifier (122) configured to convert an alternating current output from the electrical energy generator (113) into direct current, and an alternator (123) configured to convert a direct current into alternating current in order to supply the electric motor (114).

7. Aircraft (300) having at least one propeller propulsion unit (100) according to any one of Claims 1 to 6.

8. Aircraft (300) according to Claim 7, **characterised in that** it has at least one wing (302) and **in that** the kinematic system (110) is disposed under the wing.

9. Aircraft (300) according to either of Claims 7 and 8, **characterised in that** the electrical storage and power supply means are disposed in a fuselage (301) of the aircraft.

10. Aircraft (300) according to any one of Claims 7 to 9, **characterised in that** the electrical storage and power supply means (121) are disposed in the vicinity of the centre of gravity of the aircraft equipped at least with the kinematic system (110).

11. Aircraft (300) according to any one of Claims 7 to 10, **characterised in that** it further has a propeller electric motor (200) and **in that** the heat engine (111) and the electrical energy generator (113) of the propeller propulsion unit (100) are configured to also provide the propeller electric motor (200) with electrical energy.

12. Aircraft (300) according to Claim 11, **characterised in that** it further has a fuselage (301) and **in that** the propeller electric motor (200) is disposed under the wing (302) and **in that** the kinematic system (110) is positioned between the propeller electric motor (200) and the fuselage (301).
